# EUROPEAN PATENT APPLICATION

(11) **EP 4 847 302 A1**
(43) Date of publication of application: **02.12.2026**
(21) Application number: 26181445.3
(22) Date of filing: 27.05.2026
(51) Int. Cl.: B60L 53/62, B60L 53/14, B60L 53/30, B60L 53/31, B60L 53/63, B60L 53/66, B60L 53/67, B60L 53/68

(54) **METHOD AND APPARATUS TO MANAGE CHARGING CURRENTS FOR MULTIPLE ELECTRIC VEHICLE POWER TRANSFER EQUIPMENT**

(30) Priority: 27.05.2025 US 202519219866
(71) Applicant: Schneider Electric USA, Inc., Boston, MA 02108 (US)
(72) Inventor: GAO, Zhi, Morrisville, 27560 (US); FOUST, J. Charles, Morrisville, 27560 (US)
(74) Representative: Openshaw & Co.

(57) **Abstract**

Described herein are techniques for dynamically controlling multiple charging circuits (e.g., electric vehicle power transfer systems) connected to a common load center. A charging system may operate in a charging mode, in which a charging system delivers current to an electric vehicle, or in a discharging mode, in which a charging system transfers current provided by the electric vehicle back to the load center and/or to the utility. Coordination of charging/discharging operations among multiple EVPTEs is performed using a charging station management system (CSMS). A CSMS includes a computing system that may be implemented locally or remotely. The CSMS executes an optimization routine to identify, for each charging system, an appropriate level of charging and/or discharging. The optimization is performed in real-time, thus taking into account changes in the electric charge stored by the batteries as well as any changes in the current drawn by other loads.

## Description

### FIELD

Aspects of the present disclosure relate to techniques for managing charging and discharging operations among multiple electric vehicle power transfer systems.

### BACKGROUND

An electric vehicle (EV) power transfer equipment encompasses the electronic circuitry responsible for transferring electrical energy from an external power source to an electric vehicle's onboard battery system. An EVPTE typically includes power circuitry, which monitors and/or adjusts voltage and current levels to meet charging requirements. Cables, connectors, and couplers link the equipment to the vehicle inlet. These systems vary in configuration, power level, and application, and are generally categorized by standardized charging levels.

Level 1 charging typically involves the use of a standard 120-volt AC outlet. This method is primarily suited for residential use and is characterized by relatively slow charging times, often requiring overnight or longer periods to fully charge a vehicle. Level 2 charging operates at 208-240 volts AC and supports significantly higher power levels. Level 2 equipment is commonly used in residential, commercial, and public charging settings and provides substantially faster charging times compared to Level 1. DC fast charging supplies direct current at much higher power levels. Unlike Level 1 and Level 2 systems, which rely on the vehicle's onboard charger to convert AC to DC, DC fast charging performs the conversion externally, allowing for rapid charging directly to the battery. These systems are generally deployed in commercial or public environments where high-throughput charging is desired.

### SUMMARY

In accordance with the disclosed subject matter, systems, apparatus, articles of manufacture, and methods are provided for dynamically controlling multiple charging circuits (e.g., electric vehicle power transfer systems) connected to a common load center. A charging systems may operate in a charging mode, in which a charging system delivers current to an electric vehicle, or in a discharging mode, in which a charging system transfers current provided by the electric vehicle back to the load center. Coordination of charging/discharging operations among multiple EVPTEs is performed using a charging station management system (CSMS). A CSMS includes a computing system that may be implemented locally or remotely. The CSMS executes an optimization routine to identify, for each charging system, an appropriate level of charging and/or discharging. The optimization is performed in real-time, thus taking into account changes in the electric charge stored by the batteries as well as any changes in the current drawn by other loads.

Some embodiments relate a method for operating a charging station management system (CSMS) in communication with a first charging system and a second charging system. The method comprises, using circuitry to perform obtaining an available current signal indicative of a current available to be drawn from a line connected to the first and second charging systems or to be supplied by the first and second charging systems to a utility through the line; receiving, from the first charging system and via at least one communication network, a first charger current signal indicative of a first charger current flowing through the first charging system; receiving, from the second charging system and via the at least one communication network, a second charger current signal indicative of a second charger current flowing through the second charging system; generating, using the first and second charger current signals and the available current signal, a first target charger current signal and a second target charger current signal; and transmitting, via the at least one communication network, the first target charger current signal to the first charging system and the second target charger current signal to the second charging system.

Some embodiments relate to a charging station management system (CSMS) in communication with a first charging system and a second charging system,. The CSMS comprises circuitry configured to obtain an available current signal indicative of a current available to be drawn from a line connected to the first and second charging systems or to be supplied by the first and second charging systems to a utility through the line; receive, from the first charging system and via at least one communication network, a first charger current signal indicative of a first charger current flowing through the first charging system; receive, from the second charging system and via the at least one communication network, a second charger current signal indicative of a second charger current flowing through the second charging system; generate, using the first and second charger current signals and the available current signal, a first target charger current signal and a second target charger current signal; and transmit, via the at least one communication network, the first target charger current signal to the first charging system and the second target charger current signal to the second charging system.

Some embodiments relate to at least one non-transitory computer-readable storage medium storing processor-executable instructions that, when executed by at least one processor, cause at least one processor to perform a method for operating a charging station management system (CSMS) in communication with a first charging system and a second charging system. The method comprises obtaining an available current signal indicative of a current available to be drawn from a line connected to the first and second charging systems or to be supplied by the first and second charging systems to a utility through the line; receiving, from the first charging system and via at least one communication network, a first charger current signal indicative of a first charger current flowing through the first charging system; receiving, from the second charging system and via the at least one communication network, a second charger current signal indicative of a second charger current flowing through the second charging system; generating, using the first and second charger current signals and the available current signal, a first target charger current signal and a second target charger current signal; and transmitting, via the at least one communication network, the first target charger current signal to the first charging system and the second target charger current signal to the second charging system.

Some embodiments relate to a method for operating a charging system. The method comprises, using circuitry to perform: obtaining a line current signal indicative of a line current flowing through a line connected to the charging system; obtaining, using the line current signal, an available current signal indicative of a current available to be drawn from the line or to be supplied by the charging system to a utility through the line; generating a charger current signal indicative of a charger current flowing through the charging system; transmitting, via at least one communication network, the charger current signal and the available current signal to a charging station management system (CSMS); receiving, via the at least one communication network, a target charger current signal from the CSMS; and controlling the charging system, using the target charger current signal, to command a variation in the charger current.

Some embodiments relate to a charging system comprising a current sensor configured to generate a charger current signal indicative of a charger current flowing through the charging system; and circuitry configured to obtain a line current signal indicative of a line current flowing through a line connected to the charging system; obtain, using the line current signal, an available current signal indicative of a current available to be drawn from the line or to be supplied by the charging system to a utility through the line; transmit, via at least one communication network, the charger current signal and the available current to a charging station management system (CSMS), receive, via the at least one communication network, a target charger current signal from the CSMS, and control the charging system, using the target charger current signal, to command a variation in the charger current.

Some embodiments relate to at least one non-transitory computer-readable storage medium storing processor-executable instructions that, when executed by at least one processor, cause at least one processor to perform a method for operating a charging system. The method comprises obtaining a line current signal indicative of a line current flowing through a line connected to the charging system; obtain, using the line current signal, an available current signal indicative of a current available to be drawn from the line or to be supplied by the charging system to a utility through the line; obtaining a charger current signal indicative of a charger current flowing through the charging system; causing a transmitter to transmit, via at least one communication network, the charger current signal and the available current signal to a charging station management system (CSMS); causing a receiver to receive, via the at least one communication network, a target charger current signal from the CSMS; and controlling the charging system, using the target charger current signal, to command a variation in the charger current.

The foregoing summary is not intended to be limiting. Moreover, various aspects of the present disclosure may be implemented alone or in combination with other aspects.

### BRIEF DESCRIPTION OF DRAWINGS

Various aspects and embodiments will be described with reference to the following figures. It should be appreciated that the figures are not necessarily drawn to scale. Items appearing in multiple figures are indicated by the same or a similar reference number in all the figures in which they appear.
FIG. 1 is a diagram illustrating a charging environment for managing multiple charging systems, in accordance with some embodiments of the technology described herein.
FIG. 2 is a diagram illustrating an example of a charging system in additional detail, in accordance with some embodiments of the technology described herein.
FIG. 3A is a diagram illustrating an example of circuitry for determining whether a charging system is operating in a charging mode or a discharging mode, in accordance with some embodiments of the technology described herein.
FIG. 3B is a diagram illustrating an example of a digital filter that may be used as part of the circuitry of FIG. 3A, in accordance with some embodiments of the technology described herein.
FIG. 4A is a diagram illustrating an example of a root mean square (RMS) calculation module that may be used as part of the first charging system of FIG. 1, in accordance with some embodiments of the technology described herein.
FIG. 4B is a diagram illustrating an example of a root mean square (RMS) calculation module that may be used as part of the second charging system of FIG. 1, in accordance with some embodiments of the technology described herein.
FIG. 5 is a diagram illustrating an example of circuitry for determining a maximum RMS line current signal, in accordance with some embodiments of the technology described herein.
FIG. 6A is a diagram illustrating an example of circuitry for determining target charger currents, in accordance with some embodiments of the technology described herein.
FIG. 6B is a diagram illustrating another example of circuitry for determining target charger currents, in accordance with some embodiments of the technology described herein.
FIG. 7 is a flowchart illustrating a method for operating a charging station management system (CSMS) in communication with a first charging system and a second charging system, in accordance with some embodiments of the technology described herein.
FIG. 8 is a flowchart illustrating a method for operating a charging system, in accordance with some embodiments of the technology described herein.
FIG. 9 is an example implementation of an electronic platform, in accordance with some embodiments of the technology described herein.

### DETAILED DESCRIPTION

The present disclosure generally provides techniques for dynamically controlling multiple charging circuits (e.g., electric vehicle power transfer systems (EVPTS)) connected to a common load center. A load center may represent the main electric panel or breaker panel within a residential, commercial, or public site. A load center may serve as the central distribution point for electrical power within the site and may be connected to the utility company's service line (e.g., via a meter) which delivers power to the site. Example use cases for the present disclosure include charging and/or discharging power from at least one battery of an electric vehicle (EV).

Charging systems of the types described herein may operate in accordance with a charging mode, in which a charging system delivers current to an electric vehicle, or in accordance with a discharging mode, in which a charging system transfers current provided by the electric vehicle back to the load center. In this respect, these charging systems can be considered bidirectional charging systems, at least in some embodiments. The charging mode can correspond to an external power source charging a battery of the EV. The discharging mode can correspond to discharging power from the EV to power an external load. To detect the charging/discharging mode, the techniques involve determining directionality of the current flowing through the bidirectional charging system.

The present disclosure is applicable to a power transfer system, such as an electric vehicle power transfer system (EVPTS). An EVPTS may be used to supply power from an AC source, such as a utility electric grid, to charge a power source of an EV, such as one or more rechargeable batteries. The EVPTS may include a charging circuit and a charging circuit interrupting device (CCID).

The inventors have recognized several technological challenges with conventional environments involving multiple EVPTSs. The increased adoption of electric vehicles (EVs) has led many establishments (e.g., households or enterprises) to connect multiple electric vehicle power transfer equipment to a load center. Those EVPTEs provide simultaneous charging and/or discharging services to the EVs. Charging and/or discharging services are often associated with significant amounts of current. However, if not properly coordinated, such large amounts of current may lead to tripping of load center's branch circuit breakers and/or main circuit breaker, leading to disrupted electrical services to the EV users and dissatisfied customers.

The inventors have developed novel techniques to dynamically control multiple EVPTEs to perform charging and/or discharging operations. The proposed approach offers an optimized experience to EV users, resulting in enhanced customer satisfaction. In some embodiments, coordination of charging/discharging operations among multiple EVPTEs is performed using a charging station management system (CSMS) in communication with the EVPTEs. A CSMS includes a computing system that may be implemented locally or remotely (e.g., a dedicated computer system located within the site or a cloud-based computing environment). The coordination may involve determining the amount of current available to be drawn at the site, based on the current consumption of each charging system and any other loads drawing current from the same line. In some embodiments, this includes assessing the operational state of each charging system. Once the available current is determined, the CSMS executes an optimization routine to identify, for each charging system, an appropriate level of charging and/or discharging. The optimization is performed in real-time, thus taking into account changes in the charging/discharging current by the batteries as well as any changes in the current drawn by other loads.

The techniques described herein may be implemented in any of numerous ways, as the techniques are not limited to any particular manner of implementation. Examples of details of implementation are provided herein solely for illustrative purposes. Furthermore, the techniques disclosed herein may be used individually or in any suitable combination, as aspects of the technology described herein are not limited to the use of any particular technique or combination of techniques.

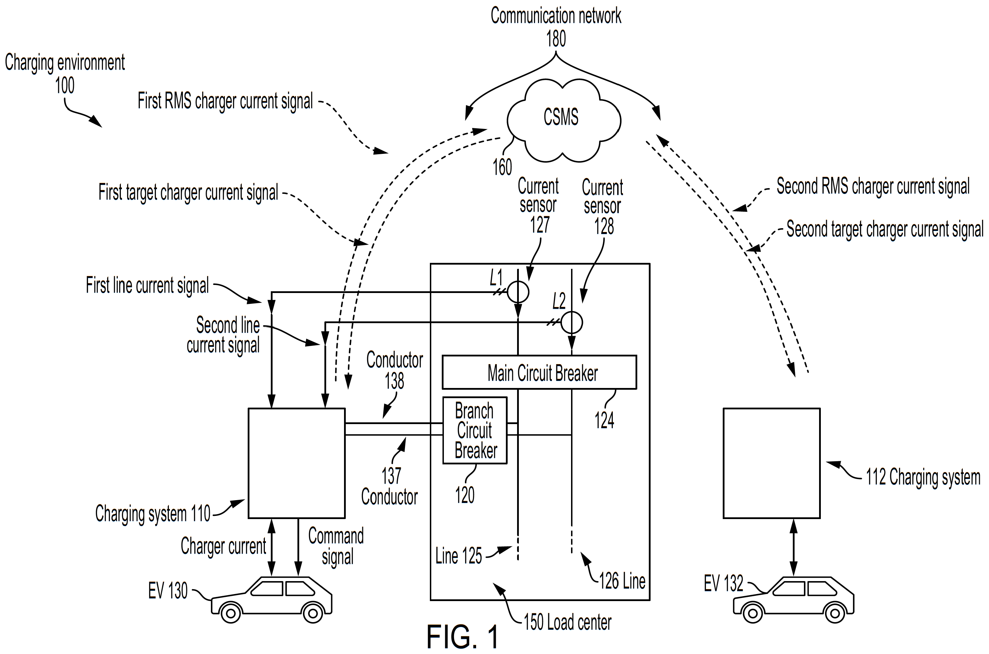

Turning to the figures, FIG. 1 is a diagram illustrating a charging environment 100 for managing multiple charging systems. The environment of FIG. 1 includes a load center 150, to which charging systems 110 and 112 are connected. In some embodiments, more than two charging systems may be connected to load center 150. Charging systems 110 and 112, also referred to as "EVPTSs" or simply as "chargers" include circuitry configured to charge at least one battery. In FIG. 1, charging systems 110 and 112 are connected to batteries included within electric vehicles (EV) 130 and 132, respectively. The electric vehicles 130 and 132 are vehicles powered entirely or at least in part by the at least one battery. Examples of electric vehicles include a battery electric vehicle, a plug-in hybrid electric vehicle, and a hybrid electric vehicle. The electric vehicles shown are land vehicles. Examples of a land vehicle include an all-terrain vehicle, a bus, a construction vehicle, an electrified cart, a sedan, a motorcycle, a sports utility vehicle, a truck, and a van. Alternatively, the electric vehicles may be a marine vehicle (e.g., a boat, a ship) or an aerial vehicle (e.g., a drone, a human piloted aircraft). It should be noted, however, that aspects of the present disclosure are not limited to use with EVs, and may be used to charge/discharge batteries in non-mobile contexts.

Charging systems 110 and 112 implement alternating current (AC) power delivery to batteries. For example, the AC power delivery can include delivering a nominal AC power voltage of 120 Volts AC (VAC) at 60 Hz. In such an example, the AC power delivery can include delivering AC power at a voltage in a voltage range from 100 to 130 VAC at 60 Hz. Alternatively, the AC power delivery can be delivered using a different nominal AC power voltage, such as 230 VAC at 50 Hz. In such an example, the AC power delivery can include delivering AC power at a voltage in a voltage range from 220 to 240 VAC at 50 Hz.

In some embodiments, charging systems 110 and 112 may be bidirectional. As such, they may be configured to operate in one of two possible modes. In the charging mode, a charging system draws current from the utility to charge at least one battery. In the discharging mode, a charging system draws current from electric charge stored in at least one battery, thereby transferring power back to load center 150. The excess power can be returned back to the utility and/or can be used to power other loads connected to load center 150 and/or can be stored in other batteries. Charging systems 110 and 112 need not operate in the same mode. For example, charging system 110 may operate in the charging mode while charging system 112 is operating in the discharging mode. The mode may depend on the amount of electric charge stored in the batteries and/or user needs.

Load center 150 may represent the main electric panel or breaker panel within a residential, commercial, or public site. Load center 150 may serve as the central distribution point for electrical power within the site. Load center 150 is connected to the utility company's service line (e.g., via a meter) which delivers power to the site. In North America, utilities commonly supply split-phase 240V power, including two hot conductors and a neutral conductor. These can serve 110V loads or 240V loads, for example. A 110V load (typically operating at voltages between 110V and 120V) is connected to a hot conductor and the neutral conductor. By contrast, a 240V load (typically operating at voltages between 220V and 240V) is connected to two hot conductors. In Europe, utilities commonly supply single-phase 230V or three-phase 400V power. A single-phase 230V load is connected to a hot conductor and the neutral conductor.

Lines 125 and 126 represent two conductors, whether two hot conductors in accordance with the scheme used by North American suppliers, a hot conductor and a neutral conductor in accordance with the scheme used by European supplier, or otherwise. Lines 125 and 126 are protected by a main circuit breaker 124. In a typical U.S. residential setting, the most common ratings for a main circuit breaker are 100A, 150A, 200A and 400A. Other ratings are also possible. Multiple loads within the site can be connected to lines 125 and 126, either in the 110V configuration or the 240V configuration. In this example, charging systems 110 and 112 are both connected in the 240V configuration, thereby providing Level 2 charging. However, aspects of the present disclosure are not limited in this respect, and may be applied to charging systems providing Level 1 charging. In some embodiments, lines 125 and 126 may be further connected to a distributed energy resource (e.g., a photovoltaic panel).

For clarity of illustration, FIG. 1 illustrates the connections between load center 150 and charging system 110 while the connections between load center 150 and charging system 112 are omitted. However, load center 150 may be connected to charging system 112 in a similar way. Charging system 110 is connected to lines 125 and 126 through conductors 137 and 138. Charging system 110 and conductors 137 and 138 are protected by a branch circuit breaker 120. The rating of branch circuit breaker 120 may be lower than the rating of main circuit breaker 124. This is because, in some embodiments, branch circuit breaker 120 only monitors the current flowing through charging system 110 while main circuit breaker 124 monitors the current through lines 125 and 126. The rating of branch circuit breaker 120 may be between 10A and 200A, such as 40A, 50A, or 60A, for example. Charging system 112 is connected to load center 150 in a similar way. Main circuit breaker 124 may be connected to the branch circuit breakers through bus bars located inside load center 150.

Current sensors 127 and 128 sense the current flowing through lines 125 and 126, respectively. Current sensors 127 and 128 may be implemented, for example, using current transformers. A current transformer is a passive sensor that measures alternating current (AC) by producing a reduced current proportional to the current in the conductor it surrounds. However, other types of sensor may be used. Current sensors 127 and 128 generate a pair of signals (first line current signal and second line current signal) that are indicative of the line currents flowing through lines 125 and 126, respectively. As shown in FIG.1, the first line current signal and the second line current signal are transmitted to charging system 110 through a wire, although wireless means may be used in some embodiments. The same signals may be transmitted to charging system 112. As explained further below, circuitry within charging system 110 may use the line current signals to determine whether charging system 110 is in the charging mode or in the discharging mode.

A charger current flows through charging system 110 and at least one battery of EV 130. Depending on its direction, the charger current can charge the battery (in the charging mode) or discharge the battery (in the discharging mode). A cable connects charging system 110 to branch circuit breaker 120.

A charging station management system (CSMS) 160 coordinates the operation of the charging systems 110 and 112. CSMS 160 is in communication with charging systems 110 and 112 via communication network 180, which may be implemented using wired and/or wireless means. For example, communication network 180 may be implemented in accordance with IEEE 802.3 or IEEE 802.11. Other protocols may be used. CSMS 160 is part of a computing system that may be implemented locally or remotely. For example, CSMS 160 may be allocated to one or more processors within a cloud-based computing environment, enabling remote access and centralized management. Alternatively, CSMS 160 may be executed by a dedicated computer system located within the residential, commercial, or public site, or by an external computing device in communication with the local environment. In some embodiments, the functionality of CSMS 160 may be distributed across multiple processing units or consolidated within a single processing unit. Alternatively, CSMS 160 may be implemented inside a charging system. In these embodiments, communication network 180 represents a network inside the charging system.

CSMS 160 is configured to coordinate charging and discharging operations of charging systems 110 and 112. For example, CSMS may generate target charger current signals, and may transmit these signals to the charging systems. The signals are generated using an optimization process designed to determine the target charging/discharging current for each charging system. The optimization process may be performed on the basis of information collected by charging systems 110 and 112 and transmitted to CSMS 160. The information may provide an indication as to the current flowing through each charging system. In addition, the information may provide an indication as to the total available current within the site. The total available current reflects the current drawn/supplied by charging systems 110 and 112, the current drawn by other loads connected to load center 150 and, optionally, the current provided by power sources that may be connected to load center 150. The total available current may be expressed in relative terms with respect to the current capacity associated with a line and/or the rating of main circuit breaker 124. The information may account for a safety margin. For example, the total available current may be expressed with respect to 80% of the main circuit breaker rating. In one example, the information may indicate that there are only 20A available for use by the charging systems and the other loads. Alternatively, the information may be expressed as a percentage of the total available capacity associated with the line (e.g., 20% of a current capacity of 200A).

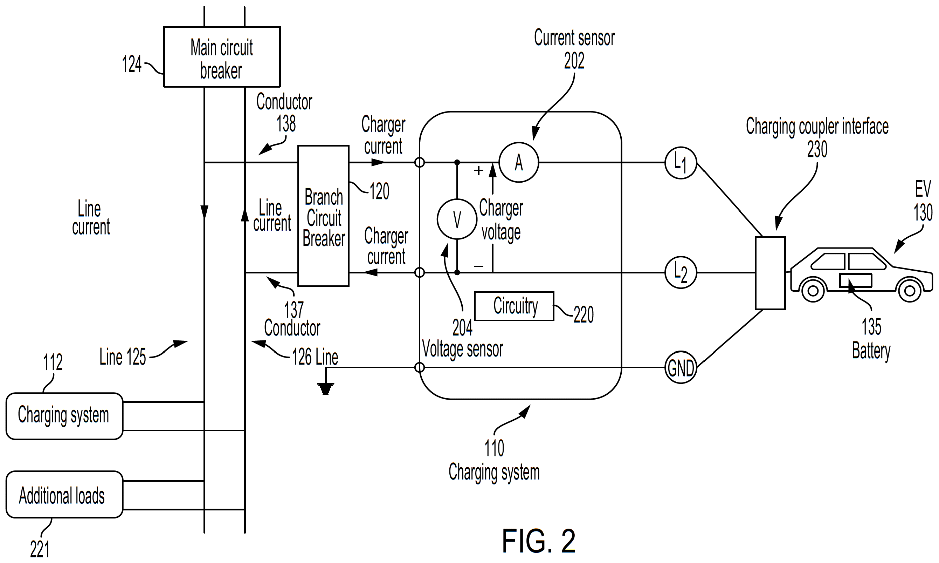

FIG. 2 is a diagram illustrating an example of a charging system 110, in additional detail. Charging system 112 may be implemented in a similar way. As shown, conductor lines 138 and 137 connect charging system 110 to lines 125 and 126, respectively. Lines 125 and 126 are also referred to as lines L1 and L2. A third line (GND) is connected to ground. Charging system 112 and additional loads 221 are also connected to lines 125 and 126, thereby drawing current from, or supplying current to, the lines. The currents flowing through lines 125 and 126 are referred to as line currents. The currents flowing through charging systems 110 and 112 are referred to as charger currents. A charging coupler interface 230 connects charging system 110 to EV 130, thereby providing electrical access to battery 135.

Current sensor 202 senses the charger current flowing though charging system 110 and voltage sensor 204 senses the charger voltage appearing within the conductors of charging system 110. In some embodiments, sampling modules are connected to current sensor 202 and voltage sensor 204. Each sampling module may include a sampler configured to sample the signal sensed by the sensor (thereby discretizing the signal in the time domain). Each sampling module may further include conversion circuitry configured to digitize the samples (thereby providing a digital representation of the sensed quantity).

Examples of a current sensor include a current transformer (CT), a Rogowski coil, and a shunt resistor. Examples of a voltage sensor include capacitive, resistive, and inductive voltage sensors. Examples of capacitive voltage sensors include capacitive voltage dividers. Examples of resistive voltage sensors include bridge circuits and voltage divider circuits. Examples of inductive voltage sensors include transformers (e.g., potential transformers).

Circuitry 220 includes control circuitry and logic circuitry. In some embodiments, circuitry 220 can be implemented by one or more analog circuits (e.g., analog-to-digital converters (ADCs), capacitors, comparators, diodes, inductors, operational amplifiers, resistors, transistors, etc.), one or more digital circuits (e.g., logic gates, etc.), one or more hardware-implemented state machines, one or more programmable processors, one or more application specific integrated circuits (ASICs), etc., and/or any combination(s) thereof. Examples of the programmable processors include central processing units (CPUs), digital signal processors (DSPs), field programmable gate arrays (FPGAs), and microcontrollers.

Circuitry 220 is configured to collect information and to transmit the collected information to CSMS 160. In addition, circuitry 220 is configured to receive information generated by CSMS 160. Circuitry 220 may use the information received from CSMS 160 to set a target current to flow through charging system 110. Circuitry 220 may include analog and/or digital components supporting these operations. For example, circuitry 220 may include a transceiver configured to communicate with CSMS 160 via communication network 180 and a module configured to command a variation in the current flowing through the charging system. For example, circuitry 220 may transmit a command signal (shown in FIG. 1) to EV 130 intended to cause EV 130 to vary the current flowing through the charging system. Additionally, circuitry 220 may include one or more processors configured to collect information, as described herein.

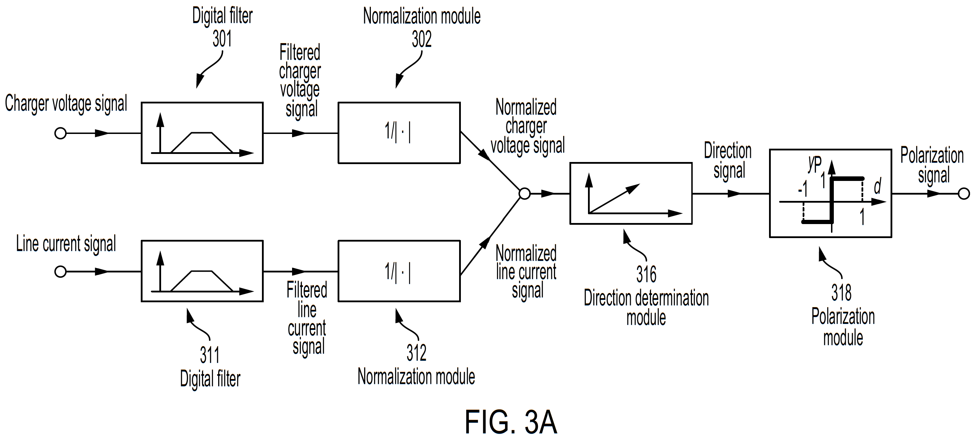

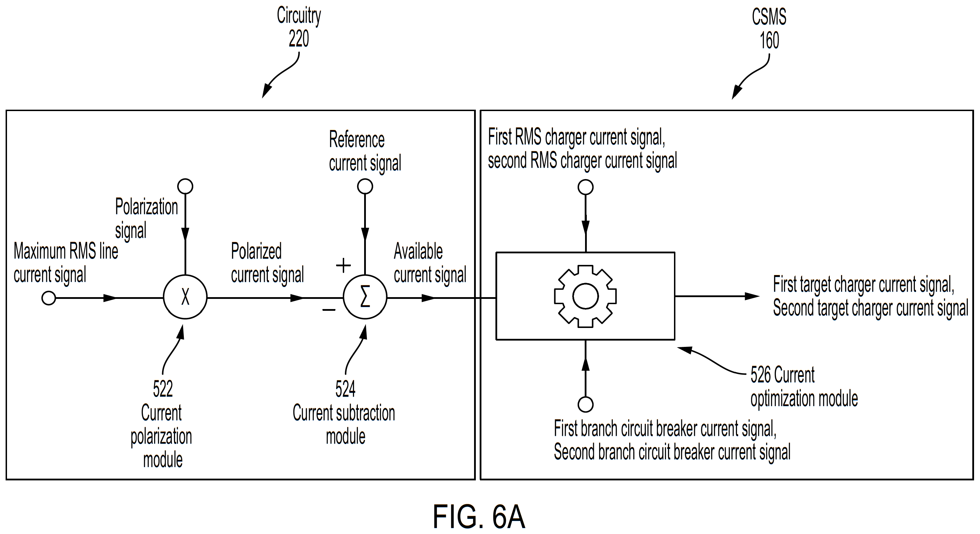

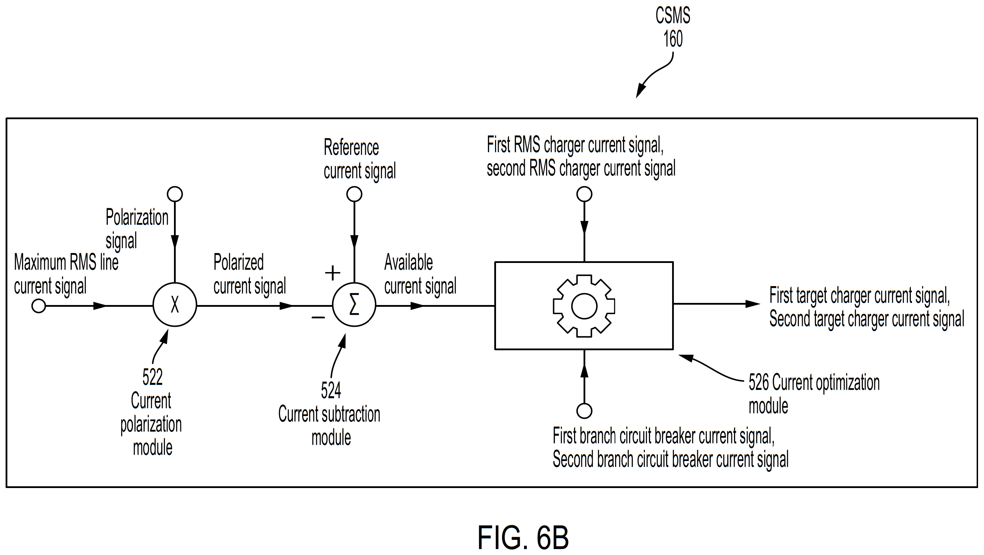

FIGs. 3A-3B, 4A-4B and 5 are diagrams illustrating various portions of circuitry 220, in accordance with some embodiments. The circuitry of FIG. 6A-6B may be implemented in part on circuitry 220 and in part on CSMS 160 (FIG. 6A) or entirely on CSMS 160 (FIG. 6B).

FIG. 3A is a diagram of a portion of circuitry 220 configured to determine whether charging system 110 is operating in a charging mode or a discharging mode. The circuitry of FIG. 3A includes digital filters 301 and 311, normalization modules 302 and 312, direction determination module 316 and polarization module 318. In some embodiments, these components can be implemented by hardware alone, such as being implemented by one or more analog circuits. In some embodiments, these components can be implemented by a combination of hardware, software, and/or firmware, e.g., can be implemented by an ASIC and/or at least one programmable processor (e.g., a DSP, a microcontroller).

Measurements of voltage and current samples from a charging system, when not filtered, often contain power system harmonics and are subject to power system transients, such as voltage sags or swells. The inventors have recognized that digital filters can remove such power system harmonics and transients, and are shown as a first digital filter 301 and a second digital filter 311. As shown, the first digital filter 301 filters the charger voltage signal into a filtered charger voltage signal. The second digital filter 311 filters the line current signal into a filtered line current signal.

In some embodiments, the first digital filter 301 and/or the second digital filter 311 are respectively implemented by a programmable processor (e.g., a DSP, a microcontroller). Alternatively, the first digital filter 301 and/or the second digital filter 311 may be implemented by one or more analog circuits (e.g., a filter circuit).

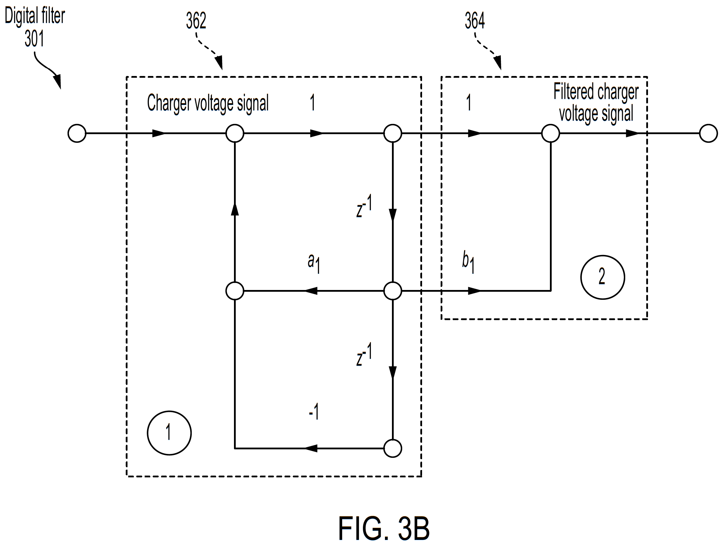

In some embodiments, the first digital filter 301 and the second digital filter 311 each implement a harmonic estimator that can use the Goertzel technique to efficiently extract harmonic components at the nominal utility voltage frequency for overcurrent protection purposes. An example implementation for the first digital filter 301 is shown in FIG. 3B. Digital filter 311 can be implemented in a similar way. Each harmonic estimator has a transfer function in the discreate-time domain. The transfer function is shown in Equation (1) below:
$H \left(z\right) = \frac{1 + {b}_{1} {z}^{- 1}}{1 + {a}_{1} {z}^{- 1} + {z}^{- 2}} ,$ Equation (1)

To extract the harmonic component at the nominal utility voltage frequency,
${b}_{1} = - exp \left(-j2π {f}_{e}/{f}_{S}\right) ,$ and
${a}_{1} = - 2 cos \left(2π {f}_{e}/{f}_{S}\right) ,$ where *f*ₑ is the nominal utility voltage frequency, and *f*_{S} is the sampling frequency.

As shown in the signal flow graph of FIG. 3B, the first digital filter 301 can implement a first harmonic estimator that extracts a voltage component at the nominal utility voltage frequency from the charger voltage signal. The first harmonic estimator can be configured to be a voltage harmonic estimator. The extracted voltage component is shown as the filtered charger voltage signal.

Digital filter 301 includes a first loop 362 to be executed first. Once the first loop 362 is completed, its output is fed into a corresponding second loop 364. The complex multiplication by b₁, which is performed to implement the zero of the transfer function in Equation (1) above, may only need to be executed once. In some embodiments, while the charger voltage signal and the line current signal are real signals, the outputs of the digital filters are complex signals. The filtered voltage and current signal contain both the amplitude and phase information.

Returning to FIG. 3A, the illustrated circuitry further includes a first normalization module 302 and a second normalization module 312. The first normalization module 302 can be configured to receive the filtered charger voltage signal as input and generate a normalized charger voltage signal as output. The normalized charger voltage signal is a normalized voltage signal having a unitary amplitude.

The first normalization module 302 can be configured to obtain the amplitude of the filtered charger voltage signal by taking the modulus of the filtered charger voltage signal, |*Filtered CVS*|, where |·| denotes the modulus of a complex number and CVS denotes the charger voltage signal. The first normalization module 302 can be configured to then scale the filtered charger voltage signal by 1/|*Filtered CVS*|, and generate the normalized charger voltage signal as output.

The second normalization module 312 can be configured to receive the filtered line current signal as input and generate a normalized line current signal as output. The normalized line current signal is a normalized current signal having a unitary amplitude.

The second normalization module 312 can be configured to obtain the amplitude of the filtered line current signal by taking the modulus of the filtered line current signal, |*Filtered LCS*|, where |·| denotes the modulus of a complex number and LCS denotes the line current signal. The second normalization module 312 can be configured to then scale the filtered line current signal by 1/|*Filtered LCS*|, and generate the normalized line current signal as output.

The normalized signals are provided as inputs to a direction determination module 316 configured to determine whether the direction of the line current is in or out of phase with respect to the charger voltage. The direction determination module 316 can carry out this determination by calculating the direction signal 232 (denoted by *d*ₑ in Equation (2) below) from the normalized charge voltage signal (identified by norm CVS in Equation (2) below) and the normalized line current signal (identified by norm ICS in Equation (2) below) in accordance with Equation (2) below:
${d}_{e} = real \left(norm CVS\right) ⋅ real \left(norm ICS\right) + imag \left(norm CVS\right) ⋅ imag \left(norm ICS\right) ,$ Equation (2), where real(·) denotes the real part of a complex signal, and imag(·) denotes the imaginary part of a complex signal.

Because both the normalized signals have unitary amplitudes, the direction signal is a real signal with a magnitude between -1 and 1. When the line current flow is within (-90°, 90°) phase angle with respect to the charger voltage (leading or lagging), the direction signal calculated from Equation (2) has a magnitude between 0 and 1. This is generally associated with the power being delivered from the utility to the site. For example, circuitry 220 can detect that the power being delivered from the utility to the site when the direction signal has a magnitude between 0 and 1.

When the line current flow is out of phase (e.g., within 90°, 270°) with respect to the charger voltage, the direction signal calculated from Equation (2) has a magnitude between -1 and 0. This is generally associated with the power being returned back to the utility. For example, circuitry 220 can detect that the power being returned back to the utility when the direction signal has a magnitude between -1 and 0.

The polarization module 318 can be configured to receive the direction signal as input to generate a polarization signal as output. In some embodiments, the polarization module 318 can be implemented by hardware alone, such as being implemented by one or more analog circuits (e.g., polarization circuitry). In some embodiments, the polarization module 318 can be implemented by a combination of hardware, software, and/or firmware. For example, the polarization module 318 can be implemented by an ASIC and/or at least one programmable processor (e.g., a DSP, a microcontroller).

Polarization module 318 can be configured to generate a polarization signal (identified by "*y*_{P}" in Equation (3) below) using the direction signal and the logic shown in Equation (3) below:
${y}_{P} = \left\{\begin{matrix}1 & 0 \leq {d}_{e} \leq 1 \\ - 1 & - 1 \leq {d}_{e} < 0\end{matrix},\right.$ Equation (3)

Therefore, a polarization signal equal to -1 may indicate that the power being returned back to the utility and a polarization signal equal to 1 may indicate that the power being delivered from the utility to the site, although the opposite logic may be used in some embodiments.

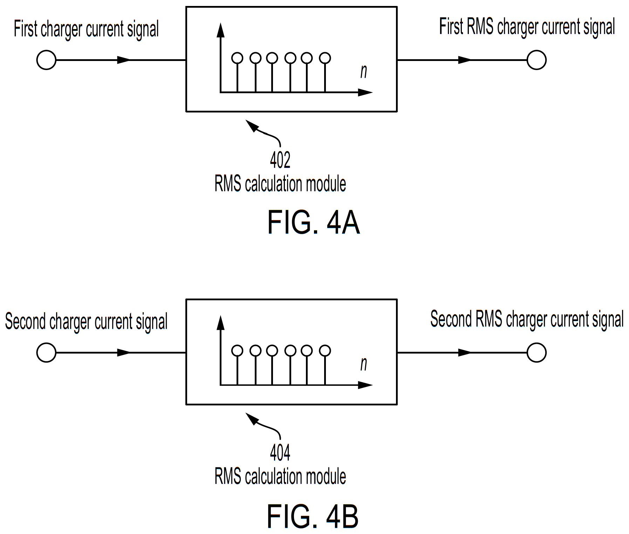

FIG. 4A and FIG. 4B illustrate root mean square (RMS) calculation modules that may be used to calculate RMS values of the charger current signals. The circuitry of FIG. 4A is part of charging system 110 while the system of FIG. 4B is part of charging system 112. RMS calculation module 402 receives as input the first charger current signal, which may be generated using current sensor 202 and may indicate the charger current flowing through charging system 110. The output of RMS calculation module 402 (the first RMS charger current signal) represents the RMS of the first charger current signal. Similarly, RMS calculation module 404 receives as input the second charger current signal, which may be generated using a current sensor and may indicate the charger current flowing through charging system 112. The output of RMS calculation module 404 (the second RMS charger current signal) represents the RMS of the second charger current signal.

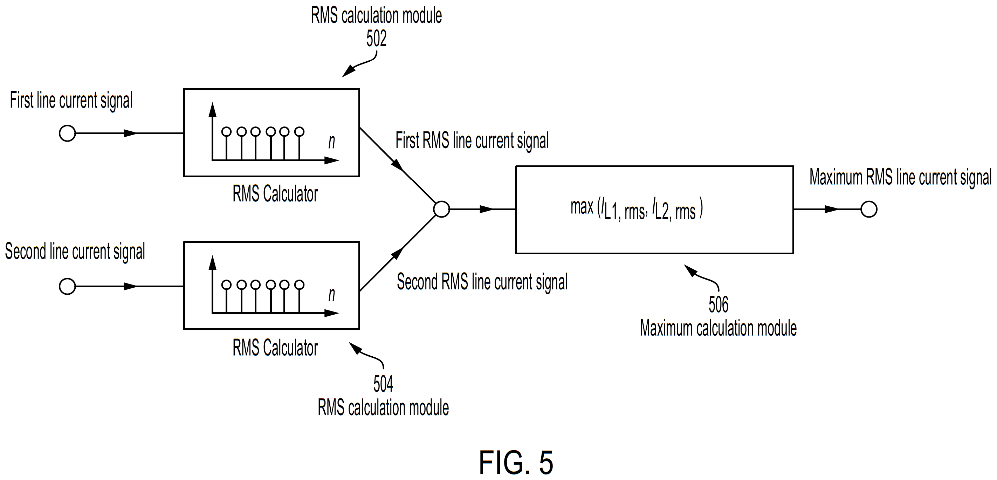

FIG. 5 is a diagram illustrating an example of circuitry for determining a maximum RMS line current signal. The circuitry of FIG. 5 may be performed by circuitry 220 of charging system 110 or by CSMS 160. The circuitry of FIG. 5 receives the first line current signal and the second line current signal, generated by current sensors 127 and 128, and indicative of the currents flowing through lines 125 and 126, respectively. RMS calculation modules 502 and 504 are used to calculate RMS values of the line current signals, thereby producing first and second RMS line current signals. Maximum calculation module 506 generates a maximum RMS line current signal by calculating the highest value between the first and second RMS line current signal.

FIGs. 6A-6B are diagrams illustrating two alternative examples of circuitry for determining target charger currents. The circuits of FIGs. 6A-6B are similar to one another in that they include the same modules. Current optimization module 526 is performed by CSMS 160 in both examples. However, the circuits of FIGs. 6A-6B differ from one another in the location of current polarization module 522 and current subtraction module 524. In the example of FIG. 6A, current polarization module 522 and current subtraction module 524 are both performed by circuitry 220; in the example of FIG. 6B, they are both performed by CSMS 160. In another example, current polarization module 522 may be performed by circuitry 220 and current subtraction module 524 may be performed by CSMS 160.

Current polarization module 522 generates a polarized current signal by polarizing the maximum RMS line current signal described in connection with FIG. 5 using the polarization signal described in connection with 3A. The polarization step may involve multiplying the maximum RMS line current signal by 1 if charging system 110 is in the charging mode or by -1 if charging system 110 is in the discharging mode. Therefore, the polarity (e.g., sign) of the polarized current signal indicates whether charging system 110 is in the charging mode or in the discharging mode.

Current subtraction module 524 generates an available current signal by subtracting the polarized current signal from a reference current signal. The reference current signal may indicate the current capacity associated with the site. For example, for a site having a 160A continuous load current rating, the reference current signal may indicate that the capacity is 160A. Alternately, the reference current signal may indicate that the capacity is a predetermined percentage of the rating (e.g., 80% of 200A), thereby providing a margin. Alternatively, the reference current signal may indicate the maximum fraction of the rating that can be allocated to the charging systems (e.g., 100A of the 200A). The remaining current may be reserved to other loads.

The available current signal may indicate the current available to be drawn from a line based on the polarized current signal relative to the reference current signal. The available current signal is provided as input to current optimization module 526. In addition to the available current signal, current optimization module 526 receives the first and second RMS charger current signals, described above in connection with FIGs. 4A-4B. Optionally, current optimization module may further receive a first branch circuit breaker current signal, a value indicative of the rating of branch circuit breaker 120 (FIG. 1) and a second branch circuit breaker current signal, a value indicative of the rating of the branch circuit breaker connected to charging system 112 (not shown in FIG. 1).

Current optimization module 526 determines, on the basis of an optimization routine performed using the received inputs, first and second target charger current signals. The first target charge current signal identifies the current that should be flown through charging system 110. Accordingly, CSMS 160 transmits the first target charger current signal to charging system 110, and charging system 110 sets the charger current based on the target value. Similarly, the second target charge current signal identifies the current that should be flown through charging system 112. Accordingly, CSMS 160 transmits the second target charger current signal to charging system 112, and charging system 112 sets the charger current based on the target value. The optimization routine may be performed in numerous ways. In one example, if both charging systems are operating in the charging mode, CSMS 160 may assign the available current, or a portion of the available current, to the charging systems equally (e.g., the first target charger current signal equals the second target charger current signal). Alternatively, CSMS 160 may assign the entire available current to the charging system associated with the battery that is closer to (or farther from) being fully charged. Once the first battery has been fully charged, charging of the second battery begins. It should be noted that the current assignment is performed in real time and takes into account not only the current flowing through the charging systems, but also the current drawn by other loads as well as the total current ceiling. In this respect, the present disclosure represents a significant improvement over prior implementations.

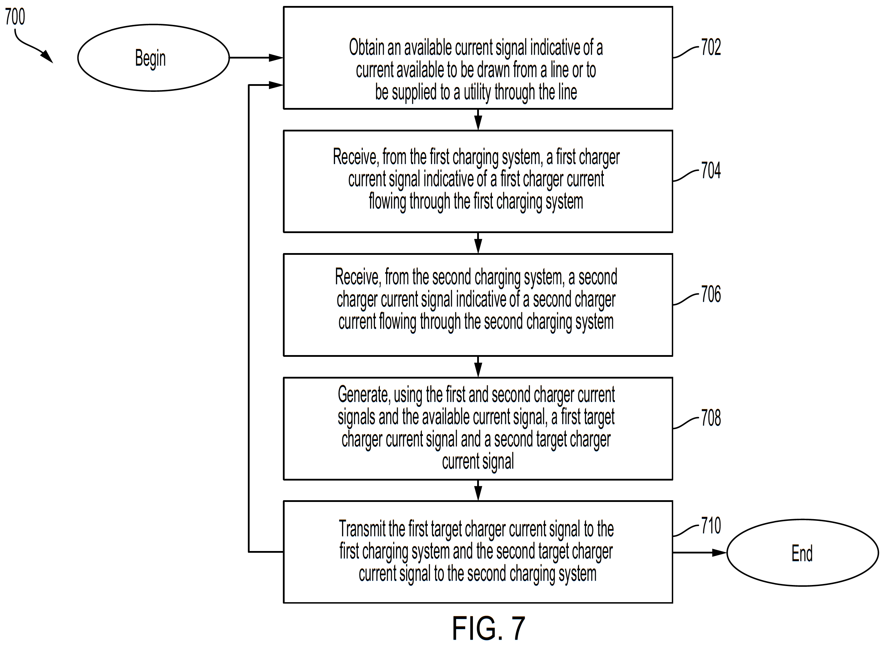

FIG. 7 is a flowchart 700 representative of an example process to be performed, and/or example machine-readable instructions that may be executed by processor circuitry. The process and/or execution of the machine-readable instructions can implement CSMS 160 of FIG. 1, or portion(s) thereof. For example, the flowchart 700 in whole or in part can be executed by circuitry of CSMS 160. Additionally or alternatively, block(s) of the flowchart 700 may be representative of state(s) of one or more hardware-implemented state machines, algorithm(s) that may be implemented by hardware alone such as an ASIC, etc., and/or any combination(s) thereof.

The flowchart 700 of FIG. 7 begins at block 702, at which CSMS 160 obtains an available current signal indicative of a current available to be drawn from a line connected to the first and second charging systems or to be supplied by the first and second charging systems to a utility through the line. The available current signal may be computed by a charging system (as shown in FIG. 6A) or by CSMS 160 itself (as shown in FIG. 6B). The available signal may be computed on the basis of the current drawn from the lines and the rating at the site, for example.

At block 704, CSMS 160 receives, from charging system 110 and via communication network 180, a first charger current signal indicative of a first charger current flowing through charging system 110. The first charger current signal may be an RMS value (as discussed in connection with FIG. 4A), or more generally may be a signal derived from the current sensed by current sensor 202 (FIG. 2) as not all embodiments are limited in this respect. Similarly, at block 706, CSMS 160 receives, from charging system 112 and via communication network 180, a second charger current signal indicative of a second charger current flowing through charging system 112. The second charger current signal may be an RMS value or more generally may be a signal derived from the current sensed by a current sensor within charging system 112.

At block 708, CSMS 160 generates, using the first and second charger current signals and the available current signal, a first target charger current signal and a second target charger current signal. Block 708 may be performed using an optimization process, as described in connection with FIGs. 6A-6B.

At block 710, CSMS 160 transmits, via communication network 180, the first target charger current signal to charging system 110 and the second target charger current signal to charging system 112. Ultimately, charging systems 110 and 112 set the current flowing through them based on the received target signals.

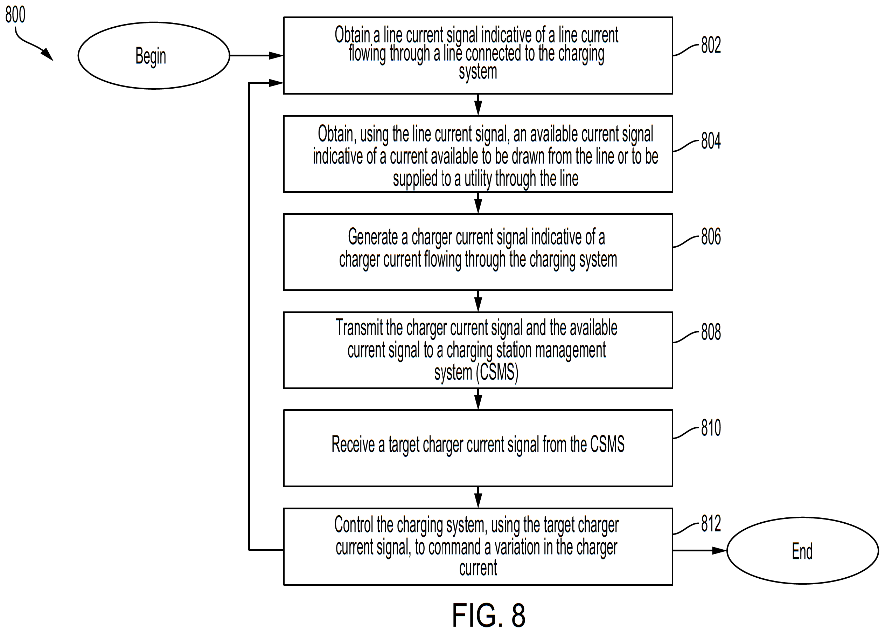

FIG. 8 is a flowchart 800 representative of an example process to be performed, and/or example machine-readable instructions that may be executed by processor circuitry. The flowchart 800 in whole or in part can be executed by circuitry 220 of charging system 110. Additionally or alternatively, block(s) of the flowchart 800 may be representative of state(s) of one or more hardware-implemented state machines, algorithm(s) that may be implemented by hardware alone such as an ASIC, etc., and/or any combination(s) thereof.

The flowchart 800 of FIG. 8 begins at block 802, at which circuitry 220 obtains a line current signal indicative of a line current flowing through a line connected to charging system 110. For example, circuitry 220 may obtain the line current signal from a current sensor placed at a load center (e.g., current sensor 127).

At block 804, circuitry 220 obtains, using the line current signal, an available current signal indicative of a current available to be drawn from the line or to be supplied by the charging system to a utility through the line. The available current signal may be obtained, for example, by subtracting a polarized current signal from a reference current signal, as described in connection with FIGs. 6A-6B. The polarized current signal, in turn, may be obtained by polarizing a signal indicative of the line current (e.g., a maximum RMS line current signal) with a polarization signal. The polarization signal, in turn, may be obtained by determining the direction of the current flowing through charging system 110. An example of how circuitry 220 may determine the current direction is described in connection with FIG. 3A, but other methods may be used.

At block 806, circuitry 220 generates a charger current signal indicative of a charger current flowing through charging system 110. The charger current signal may be an RMS value (as discussed in connection with FIG. 4A), or more generally may be a signal derived from the current sensed by current sensor 202 (FIG. 2) as not all embodiments are limited in this respect.

At block 808, circuitry 220 transmits, via communication network 180, the charger current signal and the available current signal to a charging station management system (CSMS) 160. To support the transmission (as well as the reception of block 810), circuitry 220 may include a transceiver.

At block 810, circuitry 220 receives, via communication network 180, a target charger current signal from the CSMS. The target charger current signal may be generated by CSMS 160 as described in connection with block 708 (FIG. 7).

At block 812, circuitry 220 controls charging system 110 to command a variation in the charger current flowing through it using the target charger current signal. For example, charging system 110 may transmit a command signal to EV 130 intended to cause EV 130 to set the charger current to a value corresponding to the target signal.

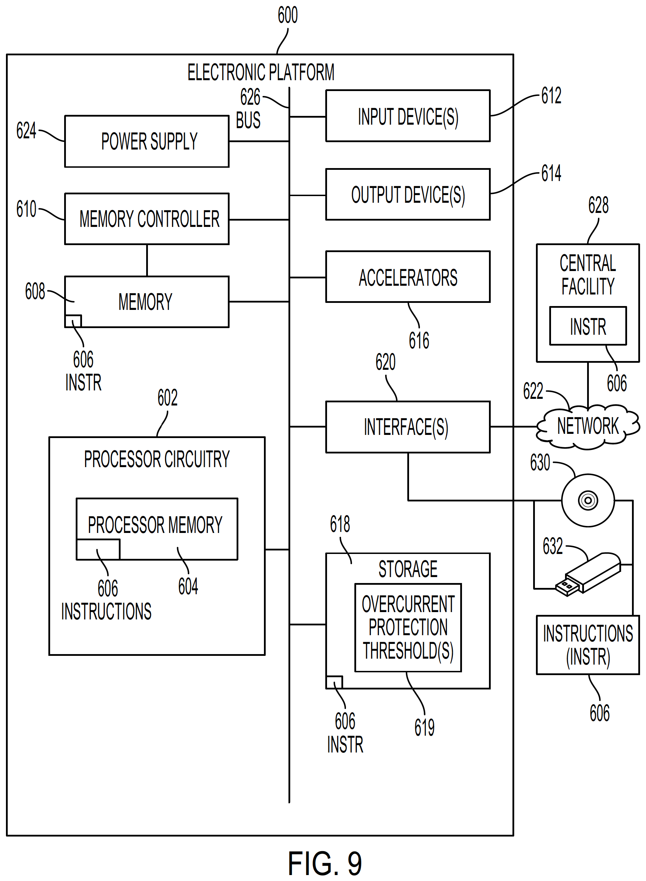

FIG. 9 is an example implementation of an electronic platform 600 structured to execute the machine-readable instructions of FIG. 7 and/or the machine-readable instructions of FIG. 8, or portion(s) thereof. As such, both CSMS 160 and circuitry 220 may include an electronic platform 600. It should be appreciated that FIG. 9 is intended neither to be a description of necessary components for an electronic and/or computing device, or portion(s) thereof, in accordance with the techniques described herein, nor a comprehensive depiction.

The electronic platform 600 of this example may be a battery charging system, an EVPTS, an electric utility meter, or any other type of computing and/or electronic device. The electronic platform 600 includes processor circuitry 602, which may be implemented by one or more programmable processors, one or more hardware-implemented state machines, one or more ASICs, etc., and/or any combination(s) thereof. The processor circuitry 602 includes processor memory 604, which may be volatile memory, such as random-access memory (RAM) of any type. The processor circuitry 602 of this example can implement any of the modules illustrated in FIGs. 3A-3B, 4A-4B, 5, 6A-6B or any portions thereof.

The processor circuitry 602 may execute machine-readable instructions 606, which are stored in the processor memory 604, to implement at least one of the modules illustrated in FIGs. 3A-3B, 4A-4B, 5, 6A-6B or any portions thereof. The machine-readable instructions 606 may include data representative of computer-executable and/or machine-executable instructions implementing techniques that operate according to the techniques described herein. For example, the machine-readable instructions 606 may include data (e.g., code, embedded software (e.g., firmware), software, etc.) representative of the flowcharts of FIG. 7 or 8, or portion(s) thereof.

The electronic platform 600 includes memory 608, which may include the instructions 606. The memory 608 of this example may be controlled by a memory controller 610. For example, the memory controller 610 may control reads, writes, and/or, more generally, access(es) to the memory 608 by other component(s) of the electronic platform 600. The memory 608 of this example may be implemented by volatile memory, non-volatile memory, etc., and/or any combination(s) thereof. For example, the volatile memory may include static random-access memory (SRAM), dynamic random-access memory (DRAM), cache memory (e.g., Level 1 (L1) cache memory, Level 2 (L2) cache memory, Level 3 (L3) cache memory, etc.), etc., and/or any combination(s) thereof. In some examples, the non-volatile memory may include Flash memory, electrically erasable programmable read-only memory (EEPROM), magnetoresistive random-access memory (MRAM), ferroelectric random-access memory (FeRAM, F-RAM, or FRAM), etc., and/or any combination(s) thereof.

The electronic platform 600 includes input device(s) 612 to enable data and/or commands to be entered into the processor circuitry 602. For example, the input device(s) 612 may include at least one sensor, such as the voltage sensor 204, the current sensor 202 of FIG. 2.

The electronic platform 600 includes output device(s) 614 to convey, display, and/or present information to a user (e.g., a human user, a machine user, etc.). For example, the output device(s) 614 may include one or more display devices, speakers, etc. The one or more display devices may include an augmented reality (AR) and/or virtual reality (VR) display, a liquid crystal display (LCD), a light-emitting diode (LED) display, an organic light-emitting diode (OLED) display, a quantum dot (QLED) display, a thin-film transistor (TFT) LCD, a touchscreen, etc., and/or any combination(s) thereof.

The electronic platform 600 includes accelerators 616, which are hardware devices to which the processor circuitry 602 may offload compute tasks to accelerate their processing. For example, the accelerators 616 may include artificial intelligence/machine-learning (AI/ML) processors, ASICs, FPGAs, graphics processing units (GPUs), neural network (NN) processors, systems-on-chip (SoCs), vision processing units (VPUs), etc., and/or any combination(s) thereof. In some embodiments, one or more modules of the processor circuitry 602 may be implemented by one(s) of the accelerators 616 instead of the processor circuitry 602. In some examples, one or more modules of the processor circuitry 602 may be executed concurrently (e.g., in parallel, substantially in parallel, etc.) by the processor circuitry 602 and the accelerators 616.

The electronic platform 600 includes storage 618 to record and/or control access to data, such as the machine-readable instructions 606. In this example, the storage 618 can store overcurrent protection threshold(s) 619. The overcurrent protection threshold(s) 619 can include the first magnitude threshold, the second magnitude threshold, the first time elapsed threshold, and/or the second time elapsed threshold. The storage 618 may be implemented by one or more mass storage disks or devices, such as HDDs, SSDs, etc., and/or any combination(s) thereof.

The electronic platform 600 includes interface(s) 620 to effectuate exchange of data with external devices (e.g., computing and/or electronic devices of any kind) via a network 622. Communication network 180 of FIG. 1 may be part of network 622. The interface(s) 620 of the illustrated example may be implemented by an interface device, such as network interface circuitry (e.g., a NIC, a smart NIC, etc.), a gateway, a router, a switch, etc., and/or any combination(s) thereof. The interface(s) 620 may implement any type of communication interface, such as BLUETOOTH^{®}, a cellular telephone system (e.g., a 4G LTE interface, a 5G interface, a future generation 6G interface, etc.), an Ethernet interface, a near-field communication (NFC) interface, an optical fiber interface, a satellite interface, a Universal Serial Bus (USB) interface (e.g., USB Type-A, USB Type-B, USB TYPE-C^{™} or USB-C^{™}, etc.), etc., and/or any combination(s) thereof.

The electronic platform 600 includes a power supply 624 to store energy and provide power to components of the electronic platform 600. The power supply 624 may be implemented by a power converter, such as an AC/DC power converter, a DC/DC power converter, etc., and/or any combination(s) thereof. For example, the power supply 624 may be powered by an external power source, such as an AC power source (e.g., an electrical grid), a DC power source (e.g., a battery, a battery backup system, etc.), etc., and the power supply 624 may convert the AC input or the DC input into a suitable voltage for use by the electronic platform 600. In some examples, the power supply 624 may be a limited duration power source, such as a battery (e.g., a rechargeable battery such as a lithium-ion battery).

Component(s) of the electronic platform 600 may be in communication with one(s) of each other via a bus 626. For example, the bus 626 may be any type of computing and/or electrical bus, such as an inter-integrated circuit (I2C) bus, a peripheral component interconnect (PCI) bus, a peripheral component interconnect express (PCIe) bus, a serial peripheral interface (SPI) bus, a universal chiplet interconnect express (UCle) bus, and/or the like.

The network 622 may be implemented by any wired and/or wireless network(s) such as one or more cellular networks (e.g., 4G LTE cellular networks, 5G cellular networks, future generation 6G cellular networks, etc.), one or more local area networks (LANs), one or more optical fiber networks, one or more private networks, one or more public networks, one or more wireless local area networks (WLANs), etc., and/or any combination(s) thereof. For example, the network 622 may be the Internet.

The network 622 of the illustrated example facilitates communication between the interface(s) 620 and a central facility 628. The central facility 628 in this example may be an entity associated with one or more servers, such as one or more physical hardware servers and/or virtualizations of the one or more physical hardware servers. For example, the central facility 628 may be implemented by a public cloud provider, a private cloud provider, etc., and/or any combination(s) thereof. In this example, the central facility 628 may compile, generate, update, etc., the machine-readable instructions 606 and store the machine-readable instructions 606 for access (e.g., download) via the network 622. For example, the electronic platform 600 may transmit a request, via the interface(s) 620, to the central facility 628 for the machine-readable instructions 606 and receive the machine-readable instructions 606 from the central facility 628 via the network 622 in response to the request.

Additionally or alternatively, the interface(s) 620 may receive the machine-readable instructions 606 via non-transitory machine-readable storage media, such as an optical disc 630 (e.g., a Blu-ray disc, a CD, a DVD, etc.) or any other type of removable non-transitory machine-readable storage media such as a USB drive 632. For example, the optical disc 630 and/or the USB drive 632 may store the machine-readable instructions 606 thereon and provide the machine-readable instructions 606 to the electronic platform 600 via the interface(s) 620.

Techniques operating according to the principles described herein may be implemented in any suitable manner. The processing and decision blocks of the flowcharts above represent steps and acts that may be included in algorithms that carry out these various processes. Algorithms derived from these processes may be implemented as software integrated with and directing the operation of one or more single- or multi-purpose processors, may be implemented as functionally equivalent circuits such as a DSP circuit or an ASIC, or may be implemented in any other suitable manner. It should be appreciated that the flowcharts included herein do not depict the syntax or operation of any particular circuit or of any particular programming language or type of programming language. Rather, the flowcharts illustrate the functional information one skilled in the art may use to fabricate circuits or to implement computer software algorithms to perform the processing of a particular apparatus carrying out the types of techniques described herein. For example, the flowcharts, or portion(s) thereof, may be implemented by hardware alone (e.g., one or more analog or digital circuits, one or more hardware-implemented state machines, etc., and/or any combination(s) thereof) that is configured or structured to carry out the various processes of the flowcharts. In some examples, the flowcharts, or portion(s) thereof, may be implemented by machine-executable instructions (e.g., machine-readable instructions, computer-readable instructions, computer-executable instructions, etc.) that, when executed by one or more single- or multi-purpose processors, carry out the various processes of the flowcharts. It should also be appreciated that, unless otherwise indicated herein, the particular sequence of steps and/or acts described in each flowchart is merely illustrative of the algorithms that may be implemented and can be varied in implementations and embodiments of the principles described herein.

Accordingly, in some embodiments, the techniques described herein may be embodied in machine-executable instructions implemented as software, including as application software, system software, firmware, middleware, embedded code, or any other suitable type of computer code. Such machine-executable instructions may be generated, written, etc., using any of a number of suitable programming languages and/or programming or scripting tools, and also may be compiled as executable machine language code or intermediate code that is executed on a framework, virtual machine, or container.

Machine-executable instructions (e.g., processor-executable instructions) implementing the techniques described herein (when implemented as one or more functional facilities or in any other manner) may, in some embodiments, be encoded on one or more computer-readable media, machine-readable media, etc., to provide functionality to the media. Computer-readable media, machine-readable media, etc., include magnetic media such as a hard disk drive, optical media such as a CD or a DVD, a persistent or non-persistent solid-state memory (e.g., Flash memory, Magnetic RAM, etc.), or any other suitable storage media. Such a computer-readable medium, a machine-readable medium, etc., may be implemented in any suitable manner. As used herein, the terms "computer-readable media" (also called "computer-readable storage media"), "computer-readable medium" (also called "computer-readable storage medium"), "machine-readable media" (also called "machine-readable storage media"), and "machine-readable medium" (also called "machine-readable storage medium") refer to tangible storage media. Tangible storage media are non-transitory and have at least one physical, structural component. In a "computer-readable medium" and "machine-readable medium" as used herein, at least one physical, structural component has at least one physical property that may be altered in some way during a process of creating the medium with embedded information, a process of recording information thereon, or any other process of encoding the medium with information. For example, a magnetization state of a portion of a physical structure of a computer-readable medium, a machine-readable medium, etc., may be altered during a recording process.

As used herein, the term "signal" is intended to broadly encompass various forms of information-bearing representations, including but not limited to analog signals, digital signals (e.g., sequences of discrete-time samples), and messages that convey information indicative of an analog or digital signal. A signal may exist in electrical, optical, magnetic, or other physical domains, and may represent data in continuous or discrete form, or in encoded formats that preserve the essential informational content of the underlying signal. A signal may include multiple entries, or in some embodiments, a single entry (e.g., an RMS signal may include a single entry, indicating the RMS of a digitized waveform).

Embodiments have been described where the techniques are implemented in circuitry and/or machine-executable instructions. It should be appreciated that some embodiments may be in the form of a method, of which at least one example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

Various aspects of the embodiments described above may be used alone, in combination, or in a variety of arrangements not specifically discussed in the embodiments described in the foregoing and is therefore not limited in its application to the details and arrangement of components set forth in the foregoing description or illustrated in the drawings. For example, aspects described in one embodiment may be combined in any manner with aspects described in other embodiments.

The phrase "and/or," as used herein in the specification and in the claims, should be understood to mean "either or both," of the elements so conjoined, e.g., elements that are conjunctively present in some cases and disjunctively present in other cases. Multiple elements listed with "and/or" should be construed in the same fashion, e.g., "one or more" of the elements so conjoined. Other elements may optionally be present other than the elements specifically identified by the "and/or" clause, whether related or unrelated to those elements specifically identified. Thus, as a non-limiting example, a reference to "A and/or B," when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

The indefinite articles "a" and "an," as used herein in the specification and in the claims, unless clearly indicated to the contrary, should be understood to mean "at least one."

As used herein in the specification and in the claims, the phrase, "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently, "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, ,and at least one, optionally including more than one, B (and optionally including other elements); etc.

Use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Also, the phraseology and terminology used herein is for the purpose of description and should not be regarded as limiting. The use of "including," "comprising," "having," "containing," "involving," and variations thereof herein, is meant to encompass the items listed thereafter and equivalents thereof as well as additional items.

All definitions, as defined and used herein, should be understood to control over dictionary definitions, definitions in documents incorporated by reference, and/or ordinary meanings of the defined terms.

Having thus described several aspects of at least one embodiment, it is to be appreciated that various alterations, modifications, and improvements will readily occur to those skilled in the art. Such alterations, modifications, and improvements are intended to be part of this disclosure and are intended to be within the spirit and scope of the principles described herein. Accordingly, the foregoing description and drawings are by way of example only.

Having thus described several aspects of at least one embodiment of the technology described herein, it is to be appreciated that various alterations, modifications, and improvements will readily occur to those skilled in the art.

Such alterations, modifications, and improvements are intended to be part of this disclosure, and are intended to be within the spirit and scope of disclosure. Further, though advantages of the technology described herein are indicated, it should be appreciated that not every embodiment of the technology described herein will include every described advantage. Some embodiments may not implement any features described as advantageous herein and in some instances one or more of the described features may be implemented to achieve further embodiments. Accordingly, the foregoing description and drawings are by way of example only.

The above-described embodiments of the technology described herein can be implemented in any of numerous ways. For example, the embodiments may be implemented using hardware, software or a combination thereof. When implemented in software, the software code can be executed on any suitable processor or collection of processors, whether provided in a single computer or distributed among multiple computers. Such processors may be implemented as integrated circuits, with one or more processors in an integrated circuit component, including commercially available integrated circuit components known in the art by names such as CPU chips, GPU chips, microprocessor, microcontroller, or co-processor. Alternatively, a processor may be implemented in custom circuitry, such as an ASIC, or semicustom circuitry resulting from configuring a programmable logic device. As yet a further alternative, a processor may be a portion of a larger circuit or semiconductor device, whether commercially available, semi-custom or custom. As a specific example, some commercially available microprocessors have multiple cores such that one or a subset of those cores may constitute a processor. However, a processor may be implemented using circuitry in any suitable format.

Further, it should be appreciated that a computer may be embodied in any of a number of forms, such as a rack-mounted computer, a desktop computer, a laptop computer, or a tablet computer. Additionally, a computer may be embedded in a device not generally regarded as a computer but with suitable processing capabilities, including a Personal Digital Assistant (PDA), a smart phone or any other suitable portable or fixed electronic device.

Also, a computer may have one or more input and output devices. These devices can be used, among other things, to present a user interface. Examples of output devices that can be used to provide a user interface include printers or display screens for visual presentation of output and speakers or other sound generating devices for audible presentation of output. Examples of input devices that can be used for a user interface include keyboards, and pointing devices, such as mice, touch pads, and digitizing tablets. As another example, a computer may receive input information through speech recognition or in other audible format.

Such computers may be interconnected by one or more networks in any suitable form, including as a local area network or a wide area network, such as an enterprise network or the Internet. Such networks may be based on any suitable technology and may operate according to any suitable protocol and may include wireless networks, wired networks or fiber optic networks.

Also, the various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine.

In this respect, aspects of the technology described herein may be embodied as a computer readable storage medium (or multiple computer readable media) (e.g., a computer memory, one or more floppy discs, compact discs (CD), optical discs, digital video disks (DVD), magnetic tapes, flash memories, circuit configurations in Field Programmable Gate Arrays or other semiconductor devices, or other tangible computer storage medium) encoded with one or more programs that, when executed on one or more computers or other processors, perform methods that implement the various embodiments described above. As is apparent from the foregoing examples, a computer readable storage medium may retain information for a sufficient time to provide computer-executable instructions in a non-transitory form. Such a computer readable storage medium or media can be transportable, such that the program or programs stored thereon can be loaded onto one or more different computers or other processors to implement various aspects of the technology as described above. As used herein, the term "computer-readable storage medium" encompasses only a non-transitory computer-readable medium that can be considered to be a manufacture (i.e., article of manufacture) or a machine. Alternatively or additionally, aspects of the technology described herein may be embodied as a computer readable medium other than a computer-readable storage medium, such as a propagating signal.

The terms "program" or "software" are used herein in a generic sense to refer to any type of computer code or set of computer-executable instructions that can be employed to program a computer or other processor to implement various aspects of the technology as described above. Additionally, it should be appreciated that according to one aspect of this embodiment, one or more computer programs that when executed perform methods of the technology described herein need not reside on a single computer or processor, but may be distributed in a modular fashion amongst a number of different computers or processors to implement various aspects of the technology described herein.

Computer-executable instructions may be in many forms, such as program modules, executed by one or more computers or other devices. Generally, program modules include routines, programs, objects, components, data structures, etc. that perform particular tasks or implement particular abstract data types. Typically, the functionality of the program modules may be combined or distributed as desired in various embodiments.

Also, data structures may be stored in computer-readable media in any suitable form. For simplicity of illustration, data structures may be shown to have fields that are related through location in the data structure. Such relationships may likewise be achieved by assigning storage for the dataset fields with locations in a computer-readable medium that conveys relationship between the dataset fields. However, any suitable mechanism may be used to establish a relationship between information in fields of a data structure, including through the use of pointers, tags or other mechanisms that establish relationship between data elements.

Various aspects of the technology described herein may be used alone, in combination, or in a variety of arrangements not specifically described in the embodiments described in the foregoing and is therefore not limited in its application to the details and arrangement of components set forth in the foregoing description or illustrated in the drawings. For example, aspects described in one embodiment may be combined in any manner with aspects described in other embodiments.

Also, the technology described herein may be embodied as a method, of which examples are provided herein including with reference to FIGs. 4A, 4B, and 7. The acts performed as part of any of the methods may be ordered in any suitable way. Accordingly, embodiments may be constructed in which acts are performed in an order different than illustrated, which may include performing some acts simultaneously, even though shown as sequential acts in illustrative embodiments.

Use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Also, the phraseology and terminology used herein is for the purpose of description and should not be regarded as limiting. The use of "including," "comprising," or "having," "containing," "involving," and variations thereof herein, is meant to encompass the items listed thereafter and equivalents thereof as well as additional items.

As used herein, the terms "connect," "connecting," and "connected" (and variations thereof) are not limited to a direct physical or mechanical connection unless expressly stated otherwise. Rather, these terms are intended to encompass both direct and indirect electrical couplings between components, including embodiments in which the components are in communication via intermediate elements or circuitry. Accordingly, two components may be described as "connected" even if they are not in direct physical contact, provided that an electrical connection or communication is established between them.

## Claims

1. A method for operating a charging station management system (CSMS) in communication with a first charging system and a second charging system, the method comprising:
using circuitry to perform:
obtaining an available current signal indicative of a current available to be drawn from a line connected to the first and second charging systems or to be supplied by the first and second charging systems to a utility through the line;
receiving, from the first charging system and via at least one communication network, a first charger current signal indicative of a first charger current flowing through the first charging system;
receiving, from the second charging system and via the at least one communication network, a second charger current signal indicative of a second charger current flowing through the second charging system;
generating, using the first and second charger current signals and the available current signal, a first target charger current signal and a second target charger current signal; and
transmitting, via the at least one communication network, the first target charger current signal to the first charging system and the second target charger current signal to the second charging system.

2. The method of claim 1, further comprising:
controlling the first charging system to command a variation in the first charger current using the first target charger current signal;
optionally,
wherein the method further comprises:
controlling the second charging system to command a variation in the second charger current using the second target charger current signal.

3. The method of claim 1 or 2, wherein generating the first target charger current signal and the second target charger current signal comprises executing an optimization routine based on the first and second charger current signals and the available current signal;
optionally,
wherein executing the optimization routine is further based on a first branch circuit breaker current signal indicative of a rating of a branch circuit breaker connected to the first charging system.

4. The method of claim 1, 2 or 3, wherein obtaining the available current signal comprises receiving the available current signal from the first charging system.

5. The method of any preceding claim, wherein obtaining the available current signal comprises:
receiving a polarization signal identifying whether the first charging system is in a charging mode or a discharging mode;
obtaining a reference current signal; and
generating the available current signal using the polarization signal and the reference current signal.

6. A charging station management system (CSMS) in communication with a first charging system and a second charging system, the CSMS comprising:
circuitry configured to:
obtain an available current signal indicative of a current available to be drawn from a line connected to the first and second charging systems or to be supplied by the first and second charging systems to a utility through the line;
receiving, from the first charging system and via at least one communication network, a first charger current signal indicative of a first charger current flowing through the first charging system;
receiving, from the second charging system and via the at least one communication network, a second charger current signal indicative of a second charger current flowing through the second charging system;
generating, using the first and second charger current signals and the available current signal, a first target charger current signal and a second target charger current signal; and
transmitting, via the at least one communication network, the first target charger current signal to the first charging system and the second target charger current signal to the second charging system.

7. The CSMS of claim 6, wherein the first charging system is configured to:
control the first charging system to command a variation in the first charger current using the first target charger current signal;
optionally,
wherein the second charging system is configured to:
control the second charging system to command a variation in the second charger current using the second target charger current signal.

8. The CSMS of claim 6 or 7, wherein generating the first target charger current signal and the second target charger current signal comprises executing an optimization routine based on the first and second charger current signals and the available current signal;
optionally,
wherein executing the optimization routine is further based on a first branch circuit breaker current signal indicative of a rating of a branch circuit breaker connected to the first charging system.

9. The CSMS of claim 6, 7 or 8, wherein obtaining the available current signal comprises receiving the available current signal from the first charging system.

10. The CSMS of any one of claims 6 to 9, wherein obtaining the available current signal comprises:
receiving a polarization signal identifying whether the first charging system is in a charging mode or a discharging mode;
obtaining a reference current signal; and
generating the available current signal using the polarization signal and the reference current signal.

11. At least one non-transitory computer-readable storage medium storing processor-executable instructions that, when executed by at least one processor, cause at least one processor to perform a method for operating a charging station management system (CSMS) in communication with a first charging system and a second charging system, the method comprising:
obtaining an available current signal indicative of a current available to be drawn from a line connected to the first and second charging systems or to be supplied by the first and second charging systems to a utility through the line;
receiving, from the first charging system and via at least one communication network, a first charger current signal indicative of a first charger current flowing through the first charging system;
receiving, from the second charging system and via the at least one communication network, a second charger current signal indicative of a second charger current flowing through the second charging system;
generating, using the first and second charger current signals and the available current signal, a first target charger current signal and a second target charger current signal; and
transmitting, via the at least one communication network, the first target charger current signal to the first charging system and the second target charger current signal to the second charging system.

12. The least one non-transitory computer-readable storage medium of claim 11, further comprising:
controlling the first charging system to command a variation in the first charger current using the first target charger current signal;
optionally,
wherein the least one non-transitory computer-readable storage medium further comprises:
controlling the second charging system to command a variation in the second charger current using the second target charger current signal.

13. The least one non-transitory computer-readable storage medium of claim 11 or 12, wherein generating, the first target charger current signal and the second target charger current signal comprises executing an optimization routine based on the first and second charger current signals and the available current signal;
optionally,
wherein executing the optimization routine is further based on a first branch circuit breaker current signal indicative of a rating of a branch circuit breaker connected to the first charging system.

14. The least one non-transitory computer-readable storage medium of claim 11, 12 or 13,
wherein obtaining the available current signal comprises:
receiving a polarization signal identifying whether the first charging system is in a charging mode or a discharging mode;
obtaining a reference current signal; and
generating the available current signal using the polarization signal and the reference current signal.
